# DEMANDE DE BREVET EUROPEEN

(11) **EP 1 388 928 A1**
(43) Date de publication de la demande: **11.02.2004**
(21) Numéro de dépôt: 03291942.5
(22) Date de dépôt: 01.08.2003
(51) Int. Cl.: H02M 7/162

(54) **Unité de commande d'un transistor de pont redresseur munie de moyens pour réduire les effets des perturbations électromagnetiques**

(30) Priorité: 06.08.2002 FR 0210019
(71) Demandeur: VALEO EQUIPEMENTS ELECTRIQUES MOTEUR, 94017 Creteil Cedex (FR)
(72) Inventeur: Pierret, Jean-Marie, 75012 Paris (FR); Masson, Philippe, 77166 Grisy-Suisnes (FR); Pichon, Francis, 95610 Eragny sur Oise (FR)
(74) Mandataire: Gamonal, Didier

(57) **Abrégé**

L'invention concerne un redresseur de tension pour un alternateur polyphasé de véhicule automobile ou un alterno-démarreur, connecté entre l'alternateur, une alimentation (Ua) de réseau de bord du véhicule et une ligne de masse (GND) dudit véhicule, comportant un pont redresseur qui comprend plusieurs transistors de puissance (11,14) et plusieurs unités de commande (Uc11, Uc14), chaque unité de commande (Uc14) étant associée à un transistor (14) et comprenant un driver (241) et un comparateur (242), le comparateur comparant un signal de phase provenant de l'alternateur avec un signal provenant de la ligne de masse ou de l'alimentation de réseau de bord et commandant le driver en fonction d'un signal résultant de cette comparaison,
caractérisé en ce que le comparateur comporte un circuit de comparaison (C) et des moyens (Tp, D) pour réduire une instabilité de tension en sortie du circuit de comparaison provoquée par des perturbations électromagnétiques dans ledit circuit de comparaison.

## Description

### Domaine de l'invention

L'invention concerne un redresseur de tension pour alternateur polyphasé ou alterno-démarreur de véhicule automobile comportant un pont redresseur dans lequel les transistors de puissance sont commandés par des unités de commande munies de moyens permettant de réduire les effets des perturbations électromagnétiques dans ces unités de commande. L'invention concerne, notamment, les comparateurs de ces unités de commande dont le rôle est de comparer les potentiels présents sur les sorties de phase de l'alternateur avec le potentiel de masse et le potentiel de réseau de bord de l'alternateur ou de l'alterno-démarreur. Elle trouve des applications dans le domaine de l'industrie automobile et, en particulier, dans le domaine des alternateurs et des alterno-démarreurs pour véhicules automobiles.

### Etat de la technique

Ainsi qu'on le sait un alternateur comporte , comme décrit par exemple dans les documents EP A 0 515 259 et WO 02/054566, un rotor inducteur et un stator induit montés de manière coaxiale.

Le rotor est solidaire d'un arbre lui-même solidaire d'un organe de transmission de mouvement, tel qu'une poulie, appartenant à un dispositif de transmission de mouvement, tel qu'un dispositif comportant au moins une courroie, intervenant entre l'alternateur et un moteur thermique, par exemple le moteur thermique d'un véhicule automobile.

Ce rotor comporte au moins un bobinage inducteur. Il peut être du type à griffes ou à pôles saillants comme décrit dans les documents précités.

Le stator comporte un corps sous la forme d'un paquet de tôles portant des bobinages statoriques appartenant aux phases de l'alternateur. Les bobinages de ces phases sont reliés à un redresseur de tension.

Cet alternateur est une machine électrique tournante qui permet de transformer de l'énergie mécanique en énergie électrique.

Ainsi dans un véhicule automobile, l'alternateur permet de transformer un mouvement de rotation du rotor inducteur, entraîné par le moteur thermique du véhicule, en un courant électrique induit dans les bobinages du stator. L'alternateur peut aussi être réversible et constituer un moteur électrique permettant d'entraîner en rotation, via l'arbre du rotor, le moteur thermique du véhicule. Cet alternateur réversible, décrit par exemple dans les documents WO 01/69762 et FR A 2 745 444, est appelé alterno-démarreur, ou encore alternateur-démarreur. Cet alternateur réversible permet de transformer l'énergie mécanique en une énergie électrique, et vice versa. Ainsi, un alterno-démarreur peut démarrer le moteur du véhicule automobile, constituer un moteur auxiliaire pour entraîner, par exemple, un compresseur de climatisation ou encore fonctionner en mode moteur pour entraîner le véhicule automobile. En général, le stator comporte trois bobinages de sorte que l'alternateur est de type triphasé. Ces bobinages sont montés en étoile ou en triangle.

Cette machine de type polyphasé et réversible fonctionne donc en alternateur pour, notamment, charger la batterie du véhicule et, en démarreur pour entraîner le moteur à combustion interne, à savoir le moteur thermique du véhicule automobile, lors de son démarrage.

A cet effet, le pont redresseur, en sortie du stator de l'alterno-démarreur, sert également de pont de commande des phases de l'alterno-démarreur. Ce pont redresseur est relié aux différentes phases du stator et est monté entre la masse et une borne d'alimentation de la batterie. Ce pont redresseur comporte, dans une application à trois phases, trois branches comprenant chacune deux transistors de puissance de type MOSFET. Les transistors de ce pont redresseur sont pilotés chacun par une unité de commande.

La demande de brevet FR-A-2 806 553 (EP A 1 134 886) décrit un tel pont redresseur pour un alternateur triphasé. Ce pont redresseur (figure 1) comporte trois branches connectées chacune entre une phase de l'alterno-démarreur ϕ1, ϕ2, ϕ3, l'alimentation Ua du réseau de bord et la ligne de masse GND du véhicule.

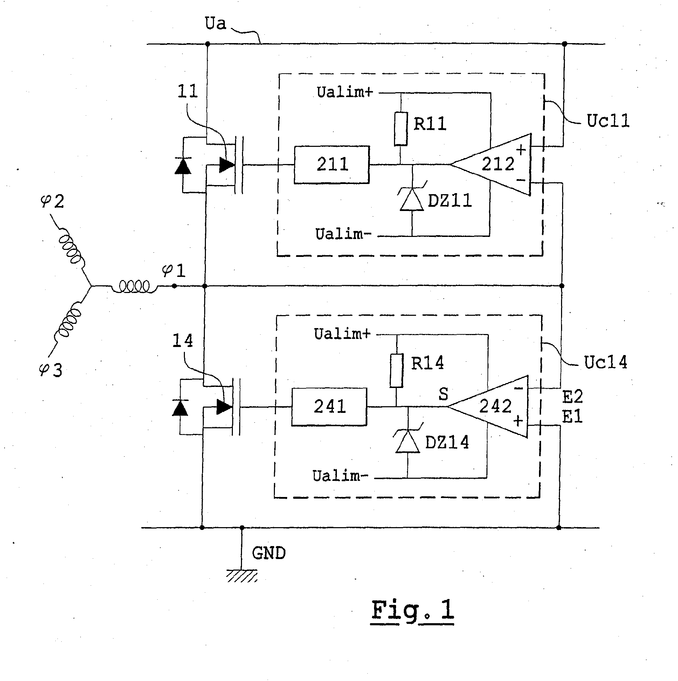

Sur la figure 1 les bobinages des phases ϕ1, ϕ2, ϕ3 sont montés en triangle et on a représenté une des branches de ce pont redresseur. Cette branche comporte deux transistors 11 et 14 connectés, respectivement, entre l'alimentation Ua (tension du réseau de bord du véhicule ou tension batterie) et la phase ϕ1 de l'alterno-démarreur et entre la phase ϕ1 de l'alterno-démarreur et la masse GND. Chaque transistor 11 et 14 est piloté, respectivement, par une unité de commande Uc11 et Uc14.

Ces unités de commande sont prévues pour comparer une tension de phase ϕ1 de l'alternateur avec une tension de référence, qui est la tension Ua ou la masse GND, et pour commander le transistor auquel elle est associée, en fonction du résultat de la comparaison. Chaque unité de commande Uc11 et Uc14 comporte un driver, appelé aussi circuit de commande, qui permet d'assurer la commande du transistor MOS via la grille de celui-ci à partir d'un signal logique. Ce signal logique est délivré par la sortie d'un comparateur 212, 242. La sortie de ce comparateur 212, 242 est reliée à une alimentation Ualim+ par une résistance, respectivement R11 et R14. Cette même sortie du comparateur 212, 242 est reliée à une alimentation Ualim- par une diode Zener DZ11, DZ14. Ces résistances R11 et R14 et ces diodes Zener DZ11 et DZ14 permettent de calibrer le niveau de sortie du comparateur 212, 242 à une valeur compatible avec les niveaux d'entrées du driver 211, 241, par exemple 0 et 5 volts, par rapport au potentiel Ualim-.

Dans l'étage supérieur du pont redresseur, appelé étage High Side, le comparateur 212 compare le potentiel de la phase ϕ1 de l'alternateur avec la tension de sortie de l'alternateur, c'est-à-dire la tension Ua du réseau de bord ou tension de batterie. Si le potentiel du signal de ϕ1 est supérieur à Ua alors le niveau de sortie du comparateur 212 est tel que le transistor 11 est rendu fermé. Au contraire, si le potentiel du signal de ϕ1 est inférieur à Ua, alors le niveau de sortie du comparateur 212 est tel que le transistor 11 est rendu ouvert.

Dans l'étage inférieur du pont redresseur, appelé étage Low Side, le comparateur 242 compare le potentiel de la phase ϕ1 de l'alternateur avec le potentiel de la ligne de masse GND. Si le potentiel du signal de ϕ1 est inférieur à GND alors le niveau de sortie du comparateur 212 est tel que le transistor 14 est rendu fermé. Au contraire, si le potentiel du signal de ϕ1 est supérieur à GND, alors le niveau de sortie du comparateur 212 est tel que le transistor 14 est rendu ouvert. Pour effectuer cette comparaison, le comparateur 242 reçoit, sur une entrée E1, le potentiel de la masse et, sur une entrée E2, le potentiel provenant de la phase de l'alternateur en particulier ϕ1. Il fournit, sur sa sortie S, le résultat de la comparaison entre le potentiel de la masse et le potentiel du signal de ϕ1,

Ainsi les deux alternances du signal phase ϕ1 sont redressées par la fermeture des transistors 11 et 14 sous l'action des drivers ou dispositifs de commande respectifs Uc11 et Uc14, avantageusement sous la forme de circuits intégrés, selon le niveau de sortie des comparateurs respectifs 212 et 242.

Les transistors 11, 14 sont commandés chacun de manière synchrone avec les signaux des phases associés.

Les potentiels des alimentations Ualim+ et Ualim- d'alimentation des comparateurs sont avantageusement différents, ici supérieurs, des potentiels des réseaux de bord Ua et de la masse GND.
Pour plus de précisions on se reportera au document FR-A-2 806 553 (EP A 1 134 886) précité.

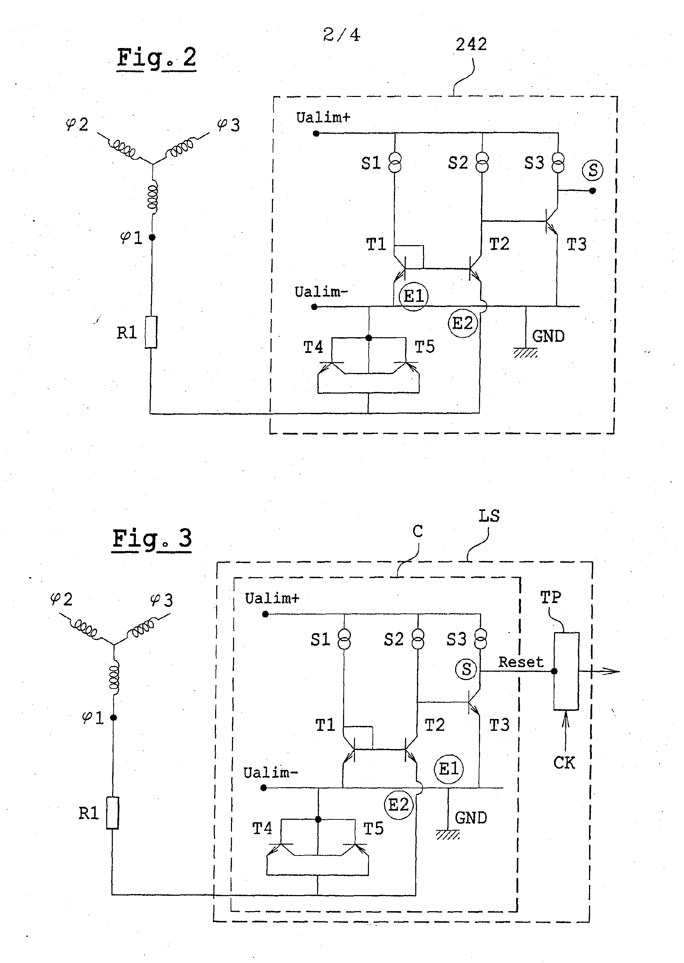

Ce comparateur 242 de l'étage Low Side est un comparateur de tension classique. De même, le comparateur 212 de l'étage High Side du pont redresseur est un comparateur de tension classique. On a représenté, sur la figure 2, un exemple d'un comparateur classique que l'on trouve habituellement dans une unité de commande d'un pont redresseur de tension pour alternateur. Il s'agit, par exemple, du comparateur 242 de l'unité de commande Uc14 de la figure 1. Avantageusement on utilise des circuits intégrés.

Ce comparateur 242 comporte un étage différentiel constitué par des transistors de jonction T1 et T2, alimentés respectivement par les sources de courant S1 et S2. Le premier étage T1/S1 reçoit le signal d'entrée E1, à savoir le signal du potentiel de la masse GND. Le second étage T2/S2 reçoit le signal d'entrée E2, à savoir le signal de phase ϕ1. Le potentiel du signal de phase est limité aux entrées de l'étage différentiel (émetteurs de T1 et de T2) par les transistors T4 et T5 montés en diode et connectés au transistor T1 via l'alimentation Ualim-. Cette limitation, ou écrêtage, est réalisée par rapport au potentiel de la masse. La résistance R1, connectée entre l'alternateur et le transistor T2, limite le courant dans les transistors T4 et T5. En effet, cette résistance R1 a une valeur suffisamment élevée, par exemple de 10000 ohms, pour éviter l'échauffement et la destruction des transistors écrêteurs T4 et T5.

Le résultat de la comparaison entre les entrées E1 et E2 est disponible sur la sortie S du transistor T3, c'est-à-dire sur le collecteur du transistor T3 alimenté par la source de courant S3.

Ce comparateur 242, montré sur la figure 2, présente des impédances d'entrée assez faibles, ce qui diminue la sensibilité du comparateur aux perturbations électromagnétiques mais qui présente le défaut d'être peu précis à cause des courants importants transitant par ces entrées. Ces courants sont issus des sources de courant S1 et S2. Ils sont de l'ordre de 30 microampères, alors que le courant à l'entrée d'un comparateur est habituellement de l'ordre de 0,1 microampères. Or, un courant de 30 microampères provoque un décalage de 300 millivolts entre les deux entrées E1 et E2 du comparateur, à cause de la résistance R1. Un tel décalage est inacceptable dans une unité de commande de pont redresseur, où la fermeture et surtout l'ouverture des transistors doit être déterminée précisément.

Or, l'utilisation de simples comparateurs présente des défauts de stabilité en présence de faibles débits, pour les raisons qui vont être précisées maintenant. En effet, quand le transistor de puissance 14 est fermé, la différence de potentiel, entre le potentiel du signal de ϕ1 et potentiel de la masse GND, est réduite à la tension de déchet Vdson du transistor de puissance 14. De même, lorsque le transistor de puissance High Side 11 est fermé, la différence entre le potentiel du signal de ϕ1 et le potentiel du réseau de bord Ua est réduit à la tension de déchet Vdson du transistor 11.

Pour réduire cette tension de déchet, chaque transistor de puissance est, en fait, réalisé par un groupe de transistors placés en parallèle les uns avec les autres, ce qui permet de réduire cette tension de déchet. La résistance Rdson, lorsque ce groupe de transistors est à l'état passant, est alors de l'ordre du milliohm.

Si le courant débité par chaque phase de l'alternateur est important, c'est-à-dire de l'ordre de 100 ampères, par exemple, la tension Vdson est de 100 millivolts, ce qui est suffisant pour être traité par les comparateurs 212 et 242. Par contre, si le courant débité par chaque phase de l'alternateur est faible, de l'ordre de 5 ampères, par exemple, la tension Vdson n'est alors que de 5 millivolts. Cette tension est trop faible pour être détectée par les comparateurs. En effet, la présence de perturbations électroniques, notamment de fréquence élevée ou des pics de tension, dans les unités de commande rend cette différence de potentiel difficilement détectable sur les entrées des comparateurs 212 et 242, quand ces entrées sont à forte impédance. Dans ce cas, l'effet de ces perturbations électromagnétiques de fréquence élevée se traduit par des instabilités de tension en sortie des comparateurs.

Pour limiter cette instabilité de tension en sortie des comparateurs, il est possible, par exemple, de réaliser des liaisons très courtes entre les sorties de phase de l'alternateur, les potentiels de masse et de sortie de l'alternateur et les entrées des comparateurs.

Il est également envisageable d'introduire une hystérésis sur les niveaux de détection des comparateurs afin de ne prendre en compte que des niveaux confirmés et de rendre ainsi les comparateurs moins sensibles aux perturbations électromagnétiques.

Une autre possibilité consiste à placer des temporisations en sortie des comparateurs pour obtenir des niveaux confirmés.

Cependant, ces techniques ne sont pas toujours compatibles avec la fonction de redressement synchrone et les technologies des circuits intégrés utilisés. En effet, le redressement synchrone n'autorise aucun délai, lors de l'ouverture des transistors de puissance 11 et 14, dès que le niveau des signaux de phase passe entre le potentiel du réseau de bord Ua et le potentiel de la masse GND. Une temporisation produirait alors une décharge de la batterie dans les transistors de puissance 11 et 14 restés fermés pendant le temps imposé par la temporisation.

De plus, les technologies des circuits intégrés supportent mal que les entrées des comparateurs soient soumises à des amplitudes importantes comme celles délivrées par les signaux de phase. Il est connu d'écrêter ces signaux à des valeurs compatibles avec ces technologies, ce qui impose de limiter le courant résultant par des résistances de forte valeur, de l'ordre de 10000 ohms, afin de limiter l'énergie dissipée dans ces résistances. Dans ces conditions, on retrouve le cas défavorable où les comparateurs ont des entrées à impédances élevées, très sensibles aux perturbations électromagnétiques notamment de fréquence élevée.

### Exposé de l'invention

L'invention a justement pour but de remédier aux inconvénients des techniques exposées précédemment. A cette fin, l'invention propose une unité de commande des transistors dans laquelle le comparateur comporte des moyens pour réduire les effets des perturbations électromagnétiques, c'est-à-dire pour réduire l'instabilité de tension en sortie du comparateur.

D'une façon plus précise, l'invention concerne un redresseur de tension pour un alternateur polyphasé de véhicule automobile ou un alterno-démarreur-démarreur, connecté entre l'alternateur, une alimentation de réseau de bord du véhicule et une ligne de masse dudit véhicule, comportant un pont redresseur qui comprend plusieurs transistors de puissance et plusieurs unités de commande, chaque unité de commande étant associée à un transistor et comprenant un driver et un comparateur, le comparateur comparant un signal de phase provenant de l'alternateur avec un signal provenant de la ligne de masse ou de l'alimentation de réseau de bord et commandant le driver en fonction d'un signal résultant de cette comparaison. Ce redresseur de tension se caractérise par le fait que le comparateur comporte un circuit de comparaison et des moyens pour réduire une instabilité de tension en sortie du circuit de comparaison provoquée par des perturbations électromagnétiques dans ledit circuit de comparaison.

Dans un premier mode de réalisation de l'invention, ces moyens consistent en une temporisation qui est active uniquement lorsque le potentiel du signal de phase n'est pas compris entre le potentiel du réseau de bord et le potentiel de la masse, ce qui correspond à la fermeture des transistors de puissance. Ces temporisations n'agissent pas, ou ont une durée nulle, dans le cas inverse, c'est-à-dire quand le niveau du signal de phase (à savoir, le potentiel du signal de phase) est compris entre le potentiel du réseau de bord et le potentiel de la masse, ce qui correspond à l'ouverture des transistors de puissance.

Dans un autre mode de réalisation, ces moyens consistent en un circuit diminuant fortement l'impédance d'entrée du comparateur lorsque le potentiel du signal de phase n'est pas compris entre le potentiel du réseau de bord et le potentiel de la masse. Dans ce cas, les entrées du comparateur restent à impédances élevées quand le dispositif d'écrêtage entre en action, afin de protéger ces entrées. Par contre, l'impédance d'entrée diminue fortement, de telle sorte que ces entrées deviennent beaucoup moins sensibles aux perturbations électromagnétiques, lorsque le comparateur doit basculer.

Bien entendu on peut combiner les deux modes de réalisation.

### Brève description des figures

La figure 1, déjà décrite, représente un étage d'un pont redresseur de tension.

La figure 2, déjà décrite, représente un comparateur classique dans une unité de commande du pont redresseur de la figure 1.

La figure 3 représente un premier mode de réalisation d'un comparateur selon l'invention.

La figure 4 représente un second mode de réalisation d'un comparateur selon l'invention.

Les figures 5 et 6 représentent des variantes du comparateur de la figure 4.

### Description détaillée de modes de réalisation de l'invention

Dans la description les éléments communs seront par simplicité affectés des mêmes signes de référence.

Dans toute la description qui va suivre, on va décrire un comparateur d'un étage Low Side. Il est à noter toutefois que le comparateur de l'étage High Side est symétrique au comparateur de l'étage Low Side. La conception du comparateur de l'étage High Side est donc semblable, mais symétrique, à celle du comparateur de l'étage Low Side. Aussi, ce qui va être décrit pour le comparateur Low Side peut également s'appliquer, de façon symétrique, au comparateur High Side. En particulier, lorsque le potentiel du signal de phase est comparé, dans le comparateur Low Side, au potentiel de la masse, alors dans un comparateur High Side, ce même potentiel du signal de phase serait comparé au potentiel du réseau de bord Ua.

Selon l'invention, le comparateur Low Side (LS) comporte des moyens qui permettent d'atténuer ou d'éliminer les effets des perturbations électromagnétiques notamment de fréquence élevée, décrits précédemment. On considère alors que le comparateur LS comporte un circuit de comparaison C, qui correspond au comparateur 242 de la figure 2 et des moyens permettant de limiter les effets des perturbations électromagnétiques. Ces moyens ont pour rôle de réduire ou d'éliminer l'instabilité de la tension en sortie du comparateur tout en étant compatibles avec la fonction de redressement synchrone et avec la technologie des circuits imprimés.

Ces moyens réduisent les échauffements du comparateur en évitant des charges et des décharges à des fréquences élevées. Ces moyens permettent de ménager les drivers 211 et 241 de la figure 1.

Ces moyens peuvent être réalisés selon plusieurs modes de réalisation.

Dans un premier mode de réalisation de l'invention, représenté sur la figure 3, les moyens pour réduire l'instabilité de tension en sortie du comparateur, due notamment aux perturbations électromagnétiques de fréquences élevée, comportent un circuit de temporisation connecté en sortie du circuit de comparaison. Sur cette figure 3, le comparateur porte la référence LS et le circuit de comparaison la référence C. L'entrée Reset du circuit de temporisation Tp est connectée sur la sortie S du circuit de comparaison C. ce circuit de temporisation Tp permet de fournir au transistor de puissance 14 des niveaux de sortie confirmés. En d'autres termes, le niveau de la tension fournie en sortie du comparateur LS est stabilisée pendant un temps de temporisation prédéfini, ce qui permet de limiter l'instabilité de tension due aux perturbations électromagnétiques de fréquences élevée. Le temps de temporisation est donné par l'entrée CK du circuit de temporisation Tp. Comme ce circuit de temporisation est placé en sortie du circuit de comparaison, il est actif uniquement lors de la fermeture du transistor 14, c'est-à-dire quand le potentiel du signal de phase passe en dessous du potentiel de la masse. Dans le cas inverse, c'est-à-dire lorsque le potentiel du signal de phase est compris dans l'intervalle entre le potentiel de la masse GND et le potentiel du réseau de bord Ua, alors la temporisation est inactive ou a une durée nulle. Ainsi, lorsque le comparateur LS détecte un niveau logique 0, la temporisation est nulle (c'est-à-dire que la remise à zéro du circuit de temporisation est effectuée immédiatement) et l'ouverture du transistor de puissance 14 est immédiate. Quand le comparateur LS détecte un niveau logique 1, la temporisation est activée et la fermeture du transistor n'intervient qu'après un temps de temporisation, par exemple de 100 microsecondes.

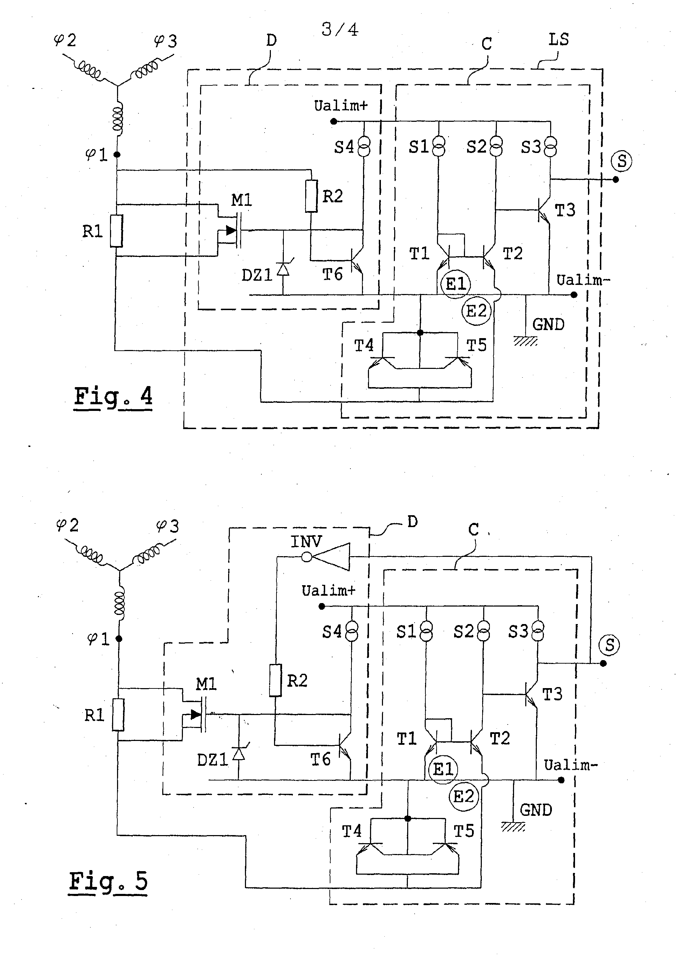

Un second mode de réalisation du comparateur de l'invention est représenté sur la figure 4. Dans ce mode de réalisation, les moyens pour limiter, ou supprimer, l'instabilité de tension en sortie du circuit de comparaison C comportent des moyens permettant de réduire fortement les impédances d'entrée sur les entrées du comparateur LS lorsque le potentiel du signal de phase croise le potentiel de masse GND, c'est-à-dire devient inférieur au potentiel de la masse GND. Ces moyens consistent en un circuit D de diminution de l'impédance d'entrée, placé en entrée du circuit de comparaison C. Ce circuit de diminution D comporte :
- un transistor MOS connecté aux bornes de la résistance R1,
- une source de courant S4 alimentée par l'alimentation Ualim+,
- un transistor bipolaire T6 connecté entre la source de courant S4 et l'alimentation Ualim-.
- une résistance R2 connectée entre la sortie de l'alternateur et le transistor T6,
- une diode Zener DZ1 connectée entre la grille du transistor M1 et l'alimentation Ualim-, la grille dudit transistor M1 étant aussi connecté entre la source de courant S4 et le transistor T6.

Avantageusement les potentiels des alimentations Ualim+ et Ualim-d'alimentation du comparateur LS sont supérieurs aux potentiels des réseaux de bord Ua et de la masse GND. Il en est de même dans le mode de réalisation de la figure 3 et pour le comparateur Hight Side.

Quand le potentiel du signal de phase ϕ1 est voisin du potentiel de la masse GND, le transistor MOS M1 met en court-circuit la résistance R1. Dans ces conditions, la comparaison est perturbée uniquement par la résistance Rdson du transistor M1, qui est beaucoup plus faible que la résistance R1. Par exemple, si la résistance Rdson est égale à 50 milliohms, le décalage entre les deux entrées E1 et E2 du circuit de comparaison C n'est que de 1,5 millivolts, avec la source de courant S2 de 30 microampères, au lieu des 300 millivolts obtenus habituellement. Une telle tension est suffisamment faible pour être détectée correctement par le circuit de comparaison C. Le transistor M1 est commandé par la source de courant S4 et par le transistor T6, dont la base détecte le niveau de potentiel du signal de phase ϕ1 par rapport à la masse GND, via la résistance R2.

La figure 5 montre une variante du mode de réalisation de la figure 4. Cette variante utilise le fait que la précision de la comparaison est nécessaire uniquement lorsque le niveau du signal de phase passe entre le potentiel du réseau de bord Ua et le potentiel de la masse GND, afin de ne pas retarder l'ouverture du transistor de puissance 14 et éviter une décharge de la batterie via ce transistor de puissance. Dans le cas contraire, c'est-à-dire lorsque le niveau du signal de phase passe en-dessous du potentiel de la masse, un décalage de l'ordre de 300 millivolts est acceptable car on ne dépasse pas le seuil de jonction des diodes, lié à la technologie des transistors de puissance MOS, qui est de l'ordre de 600 millivolts. Cette propriété peut être exploitée pour réaliser une hystérésis. La variante de la figure 5 propose donc d'introduire une hystérésis sur les niveaux de détection du comparateur LS.

Pour cela, le circuit de différence D de la figure 5 comporte en outre un inverseur connecté entre la sortie S du circuit de comparaison C et le transistor de jonction T6. La résistance R2 est alors connectée entre le transistor T6 et l'inverseur INV.

Ce circuit de différence de la figure 5 introduit, dans le circuit de comparaison C, une hystérésis avec un seuil de tension, par exemple, de 100 à 300 millivolts . Cette hystérésis produit un décalage sur les niveaux de détection des entrées E1 et E2 du circuit de comparaison C, lorsque le niveau du signal de phase passe en-dessous du potentiel de la masse. Cela est réalisé par le fait que le transistor T6 est commandé par la sortie S du circuit de comparaison C, via l'inverseur INV. L'hystérésis est provoquée par la mise en court-circuit, ou hors court-circuit, de la résistance R1 par le transistor M1. Le fonctionnement obtenu est le suivant :
- il se produit un décalage, par exemple de l'ordre de 300 millivolts, aux bornes de la résistance R1 lorsque le niveau du signal de phase passe en-dessous du potentiel de la masse, et
- il ne se produit pas de décalage, ou un décalage très faible inférieur ou égal à 1,5 millivolts et correspondant au Vdson du transistor M1, lorsque le niveau du signal de phase passe entre le potentiel du réseaux de bord et le potentiel de la masse. De cette façon, l'ouverture du transistor de puissance 14 n'est pas retardée, ce qui évite une décharge de la batterie via ce transistor 14.

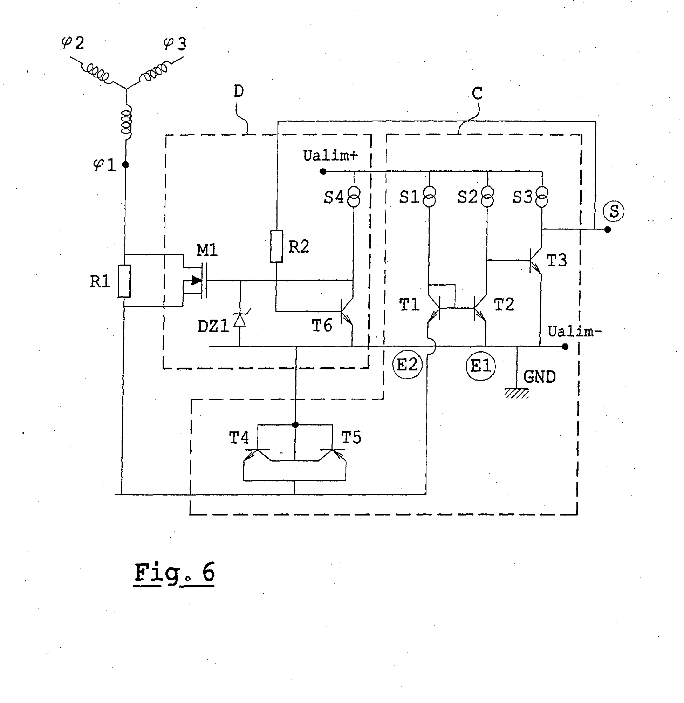

La figure 6 représente une autre variante de la figure 4, dans laquelle un hystérésis est introduite dans le circuit de comparaison par des moyens différents de ceux de la figure 5. Dans cette variante, l'inverseur INV est remplacé par un branchement différent des potentiels du signal de phase et de la masse sur les transistors d'entrée T1 et T2 du circuit de comparaison C. En particulier, dans cette variante, la sortie S du circuit de comparaison est connectée sur le transistor T6 par l'intermédiaire de la résistance R2, la résistance R1 est connectée sur le transistor T1 et les transistors T4/T5 sont connectés entre la diode DZ1 et le transistor T6.

Dans tous les cas en cas de perturbation consistant en un pic de tension on réduit l'instabilité de tension en sortie du comparateur.

Bien entendu l'invention n'est pas limitée aux exemples de réalisations décrits.

Ainsi on peut combiner les modes de réalisation. Par exemple le circuit de temporisation de la figure 3 est en variante connecté à la sortie S du circuit de comparaison de l'une quelconque des figures 4 à 6. A la figure 3 on peut prévoir un circuit D de diminution de l'impédance.

On obtient ainsi encore de meilleurs résultats.

L'alternateur ou l'alterno-démarreur peut comporter plus de trois phases et/ou comporter deux redresseurs de tension.

## Revendications

1. Redresseur de tension pour un alternateur polyphasé de véhicule automobile ou un alterno-démarreur, connecté entre l'alternateur, une alimentation (Ua) de réseau de bord du véhicule et une ligne de masse (GND) dudit véhicule, comportant un pont redresseur qui comprend plusieurs transistors de puissance (11,14) et plusieurs unités de commande (Uc11, Uc14), chaque unité de commande (Uc14) étant associée à un transistor (14) et comprenant un driver (241) et un comparateur (242), le comparateur comparant un signal de phase provenant de l'alternateur avec un signal provenant de la ligne de masse ou de l'alimentation de réseau de bord et commandant le driver en fonction d'un signal résultant de cette comparaison,
**caractérisé en ce que** le comparateur comporte un circuit de comparaison (C) et des moyens (Tp, D) pour réduire une instabilité de tension en sortie du circuit de comparaison provoquée par des perturbations électromagnétiques dans ledit circuit de comparaison.

2. Redresseur de tension selon la revendication 1, **caractérisé en ce que** les moyens pour réduire une instabilité de tension comportent un circuit de temporisation (Tp), actif lorsque le potentiel du signal de phase n'est pas compris dans un intervalle entre le potentiel de l'alimentation de réseau de bord et le potentiel de la masse et inactif lorsque le potentiel du signal de phase est compris dans l'intervalle entre le potentiel de l'alimentation de réseau de bord et le potentiel de la masse.

3. Redresseur de tension selon la revendication 1, **caractérisé en ce que** les moyens pour réduire une instabilité de tension comportent un circuit de diminution (D) de l'impédance d'entrée du circuit de comparaison (C) lorsque le potentiel du signal de phase n'est pas compris dans l'intervalle entre le potentiel de l'alimentation de réseau de bord et le potentiel de la masse.

4. Redresseur de tension selon la revendication 2, dans lequel une résistance (R1) est connectée entre l'alternateur et le comparateur, **caractérisé en ce que** le circuit de diminution de l'impédance est connecté entre la résistance (R1) et le circuit de comparaison (C) pour réduire l'impédance de ladite résistance.

5. Redresseur de tension selon l'une des revendications 3 et 4, **caractérisé en ce que** le circuit de diminution (D) de l'impédance comporte
- un transistor de puissance (M1) connecté aux bornes de la résistance (R1),
- une source de courant (S4) connectée entre une alimentation (Ualim+) et le transistor de puissance,
- un transistor de jonction (T6) connecté entre la source de courant et la ligne de masse, et
- une seconde résistance (R2) connectée entre le transistor de jonction et l'alternateur.

6. Redresseur de tension selon l'une des revendications 3 à 5, **caractérisé en ce que** le circuit de diminution produit un décalage sur les niveaux de détection des signaux d'entrée du circuit de comparaison, lorsque le potentiel du signal de phase n'est pas compris dans l'intervalle entre le potentiel de l'alimentation de réseau de bord et le potentiel de la masse.

7. Redresseur de tension selon la revendication 6, **caractérisé en ce que** le circuit de diminution comporte un inverseur (INV) connecté entre la sortie du comparateur et l'entrée du transistor de jonction.

8. Redresseur de tension selon la revendication 6, **caractérisé en ce que** l'alternateur est connecté, par l'intermédiaire de la résistance R1, à un transistor de jonction (T1) du circuit de comparaison.
